# EUROPEAN PATENT APPLICATION

(11) **EP 2 703 692 A1**
(43) Date of publication of application: **05.03.2014**
(21) Application number: 12777795.1
(22) Date of filing: 29.02.2012
(51) Int. Cl.: F16H 57/04, B60K 7/00

(54) **LUBRICATION CONTROL APPARATUS FOR VEHICLE IN-WHEEL MOTOR UNIT**

(30) Priority: 27.04.2011 JP 2011099077; 27.04.2011 JP 2011099078; 27.04.2011 JP 2011099079; 15.09.2011 JP 2011201799; 15.09.2011 JP 2011201802; 15.09.2011 JP 2011201803
(71) Applicant: Nissan Motor Co., Ltd, Yokohama-shi, Kanagawa 221-0023 (JP)
(72) Inventor: YAMAUCHI, Yasuhiro, Kanagawa 243-0123 (JP)
(74) Representative: Hoefer & Partner
(86) International application number: PCT/JP2012/055057
(87) International publication number: WO 2012/147407

(57) **Abstract**

An oil pump(s) (32) is drivingly controlled in such a way that, in a low vehicle speed region lower than a set vehicle speed VSP1 at which a stirring resistance by oil within an in-wheel unit case (3) is not in excess of an allowance level, a suction and supply quantity denoted by a solid line characteristic is provided. In other words, the oil pump(s) is stopped until the vehicle speed reaches to a predetermined vehicle speed VSP0 at which a remaining oil within an oil passage is scattered in all directions and becomes disappeared after the start of vehicle in an oil pump stopped state including a vehicle stop at which the lubrication is not necessary. Thus, an oil pump operation sound can be prevented from being noisy and a wasteful operation of the oil pump during a presence of the remaining oil can be prevented so that a traveling distance per unit electrical power can be prevented from being worsened.

## Description

### TECHNICAL FIELD

The present invention relates to a lubrication control apparatus which is useful in a drive unit (hereinafter, referred to as an in-wheel motor unit) for each of road wheels and which is used for an electric automotive vehicle travelable by driving the respective road wheels through individual electrically driven motors.

### BACKGROUND ART

The in-wheel motor unit is, for example, as shown in a Patent Document 1, provided with a speed reduction gear mechanism such as a planetary gear set in addition to the above-described electrically driven motor and constitutes a single unit to transmit a rotational power from the electrically driven motor to a corresponding one of the road wheels under a speed reduction by means of the above-described speed reduction gear mechanism to drive the corresponding road wheel.

Hence, it is necessary to lubricate the above-described speed reduction gear mechanism in each of the in-wheel motor units.

However, a resting of the lubrication for the speed reduction mechanism on stirred up oil by means of a rotary body within the in-wheel motor unit introduces an increase in a consumed electric power of the in-wheel motor unit (an electrically driven motor) due to an oil stirring resistance and introduces a worsening of an electric power consumption (a travelling distance per unit power (km/kWh) or an index representing an electric power required for the traveling for a predetermined distance) which provides a most important task for the electric automotive vehicle.

As described in Patent Document 1, an oil pump whose electric power consumption is considerably small as compared with the electric power consumption due to the oil stirring up resistance is, in many cases, used to suck oil within the lower part of the in-wheel motor unit and this oil is supplied toward a lubrication request location to perform a predetermined lubrication.

When this lubrication is carried out, a lubrication control technique described in Patent Document 1 is such that a lubrication oil quantity in one of the in-wheel motor units at a higher temperature side (oil suction supply quantity by means of an oil pump) is larger than the lubrication oil quantity in the other of the in-wheel motor units at a lower temperature side in a case where oil temperatures within a pair of in-wheel motor units (left and right in-wheel motor units which are for left and right road wheels) are mutually different from each other to eliminate an oil temperature difference between the left and right in-wheel motor units.

According to the lubrication control technique of the in-wheel motor unit, a left-and-right road wheel driving force difference caused by the oil temperature difference between the left and right in-wheel motor units are relieved so that a traveling stability of the in-wheel motor drive electric automotive vehicle can be improved.

### Pre-published Document

Patent Document 1: Japanese Patent Application First Publication No. 2008-195233

### DISCLOSURE OF THE INVENTION

### Task to be solved by the Invention

However, the lubrication control technique described in Patent Document 1 makes oil suction and supply quantity of the oil pump between the left and right in-wheel motor units different in accordance with the oil temperature difference between the left and right in-wheel motor units. Basically, the oil pump is continued to be operated even during a stop of the vehicle unless the ignition switch is in the ON state. Hence, the following problem occurs as will be described below.

That is to say, since the in-wheel motor unit is directly coupled to the corresponding one of the road wheels, the in-wheel motor unit is not disposed at an inside of the vehicle body which can need a noise sound countermeasure but it is always exposed to an outside of the vehicle body. Thus, it is difficult to make a sound shielding countermeasure.

Therefore, during a vehicle stop state in which the in-wheel motor drive vehicle is in a state of no sound, or in a low-speed region in which almost no sound traveling is carried out, an operation sound of the oil pump(s) gives a noise of a sense of uncomfortablity by an occupant or by a surrounding person outside the vehicle.

However, in the lubrication control technique described in Patent Document 1 which continues the oil pump unless the ignition switch is in the ON state even in a vehicle stop state in which no noise state occurs or even in a state in which a low vehicle speed region in which almost no sound traveling state occurs, the operation sound of the oil pump(s) during the vehicle stop or in the low vehicle speed region unavoidably provides a problem of hearing to the person outside of the vehicle from the sound having the sense of uncomfortablity.

From the viewpoint such that it is basically not necessary for the lubrication of the in-wheel motor unit at the time of the vehicle stop and, while oil is left within a lubrication oil passage even at the low vehicle speed region, the lubrication of the in-wheel motor unit is possible by means of the in-wheel motor unit and the number of rotations of the oil pump may be reduced as low as possible and the oil pumps may be stopped, this idea is embodied. That is to say, it is an object of the present invention to provide a lubrication control apparatus for the in-wheel motor unit for the vehicle which can eliminate the problem of solving the operation sound (noise) of the oil pump(s) in the in-wheel motor unit during the vehicle stop or at the low vehicle speed region and can avoid the worsening of the traveling distance per unit electric power due to a wasteful operation of the oil pump.

### Means to solve the task

In order to achieve the above-described object, a lubrication control apparatus for the vehicular in-wheel motor unit for the vehicle according to the present invention is structured as follows.

First, the in-wheel motor driven vehicle which is a prerequisite of the present invention and the lubrication control apparatus for the in-wheel motor unit used in the in-wheel motor driven vehicle will be described below. The in-wheel motor driven vehicle is travelable by driving the road wheels through the individual in-wheel drive units. In addition, the lubrication control apparatus used in this vehicle is arranged to lubricate within the above-described in-wheel motor units through oil sucked and supplied from the lower parts of the in-wheel motor unit casings.

The present invention is characterized in the structure such that oil pump drivingly control means (oil pump drivingly control section) as will be described later is installed for the lubrication control apparatus for the in-wheel motor unit.

The oil pump drivingly control means drivingly controls the oil pump in such a way that the oil pump is stopped in a state in which the vehicle is stopped and the oil pump is activated when the vehicle has arrived at a predetermined vehicle speed.

### Effect achievable by the invention

In the lubrication control apparatus for the in-wheel motor unit for the vehicle according to the present invention, the oil pump is drivingly controlled in such a way that, while the vehicle speed is from the vehicle stopped state and has reached to the predetermined vehicle speed, the oil pump is stopped and the oil pump is drivingly controlled to activate the oil pump when the vehicle speed has reached to the predetermined vehicle speed. Hence, the oil pump is drivingly controlled to activate the oil pump at the time of the arrival of the vehicle speed at the predetermined vehicle speed. Hence, a wasteful operation of the oil pump at the low vehicle speed region equal to or below the predetermined vehicle speed can be prevented. Hence, the wasteful operation of the oil pump at the time of the vehicle stop or at the low vehicle speed region equal to or lower than the above-described predetermined vehicle speed can be prevented. Then, the operation sound of the oil pump during the vehicle stop or during the low vehicle speed region at which no sound or almost no sound traveling occurs can be avoided. In addition, the worsening of the electric power consumption due to the wasteful operation of the oil pump during the vehicle stop or during the vehicle traveling at the low vehicle speed region can be avoided.

### BRIEF DESCRIPTION OF THE DRAWINGS

Fig. 1 is a longitudinal cross sectional side view representing an in-wheel motor unit having a lubrication control apparatus in a first preferred embodiment according to the present invention.
Figs. 2 (a) and 2(b) are an oil guide installed within an oil gallery of an in-wheel motor unit shown in Fig. 1, Fig. 2 (a) representing a detailed longitudinal side sectional view of the oil guide viewed from an arrow-marked direction,
with the cross section on a line of II to II in Fig. 2 (b),
and Fig. 2(b) representing a detailed front view of the oil guide viewed from a right side of Fig. 2(a).
Fig. 3 is a flowchart representing a lubrication control program executed by an oil pump controller in Fig. 1.
Fig. 4 is a flowchart representing a sub routine related to an oil pump variable flow quantity control in the lubrication control program shown in Fig. 3.
Fig. 5 is a characteristic line diagram representing an oil suction and supply quantity control characteristic of an oil pump drivingly controlled by the lubrication control program shown in Fig. 3.
Fig. 6 is a timing chart representing an oil temperature variation characteristic of the in-wheel motor unit in Fig. 1 for each of oil immersion quantities of a rotor.
Fig. 7 is a characteristic line diagram representing a variation characteristic of an oil pump target revolution speed required to achieve a constant flow quantity shown in Fig. 5 in a constant flow quantity control area shown in Fig. 5.
Fig. 8 is a characteristic line diagram representing a variation characteristic related to a reduction margin ΔVSP0 of an oil pump activation vehicle speed VSPO shown in Fig. 5 with an integration value of a demanded drive torque as a parameter.
Fig. 9 is a characteristic line diagram representing a variation characteristic related to a reduction margin ΔVSP0 of oil pump activation vehicle speed VSPO shown in

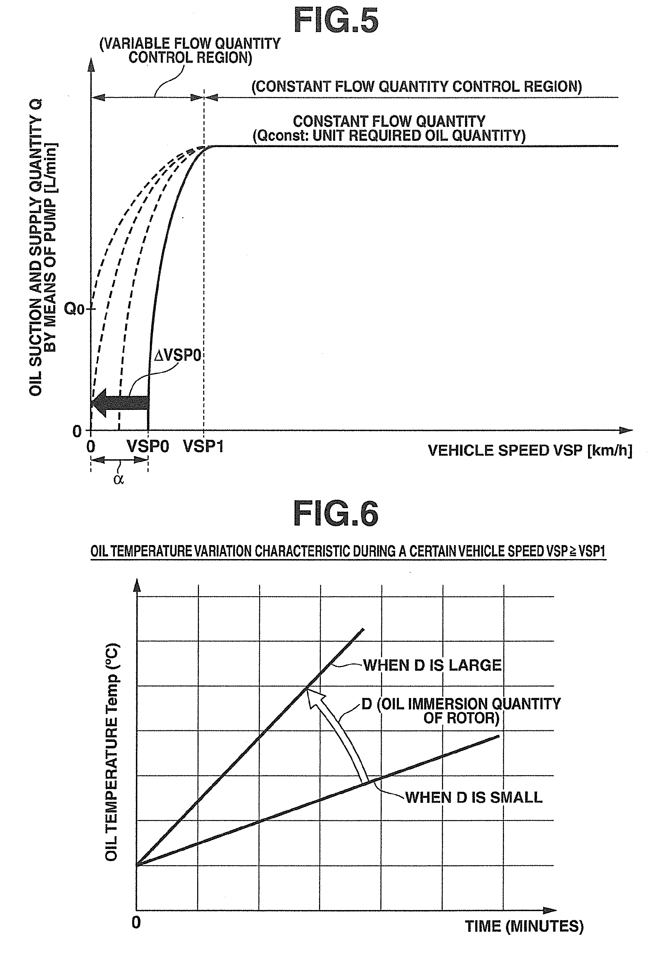

Fig. 5 with a traveling distance in the oil pump stopped state as a parameter.

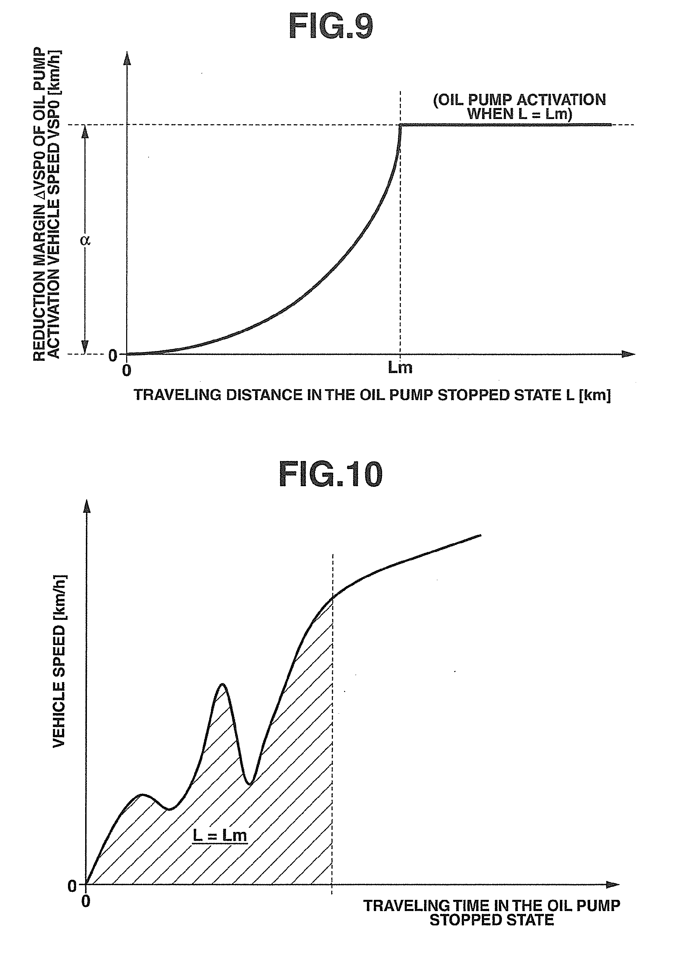

Fig. 10 is a timing chart representing an explanation of a relationship between the time integration value of a vehicle speed during a traveling of the vehicle in a stopped state of the oil pump and a traveling distance in the oil pump stopped state.

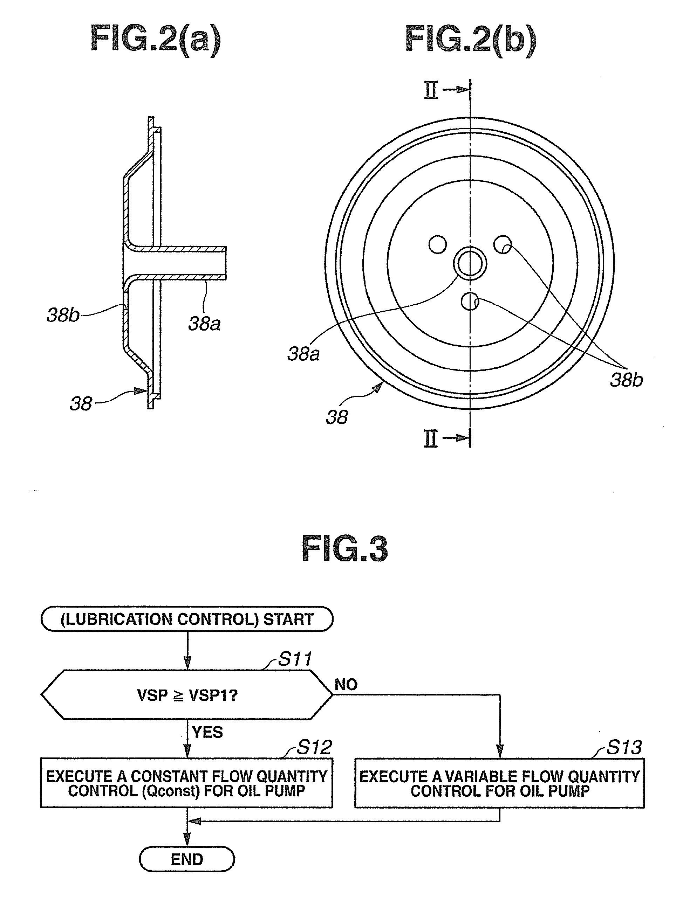

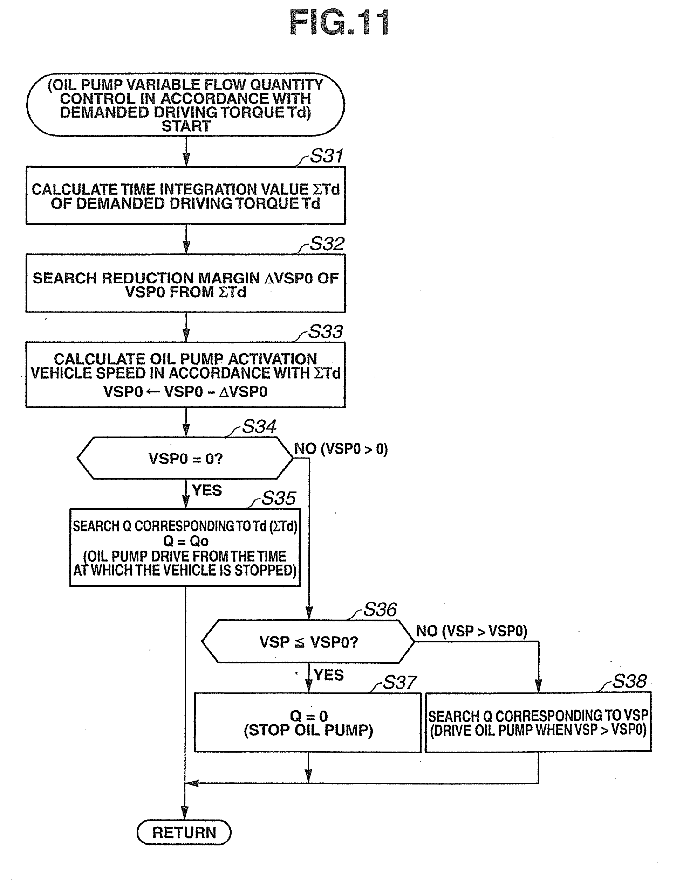

Fig. 11 is a flowchart representing a subroutine related to an oil pump variable flow quantity control in a second preferred embodiment which accords with a time integration value of a traveling distance demanded torque in a state of a stopped state of the oil pump from among the oil pump variable flow quantity controls in the lubrication control program in Fig. 3.

### Embodiments for carrying out the invention

A detailed explanation of the present invention will, hereinafter, be made on a basis of preferred embodiments shown in the attached drawings.

### <Structure of a first embodiment>

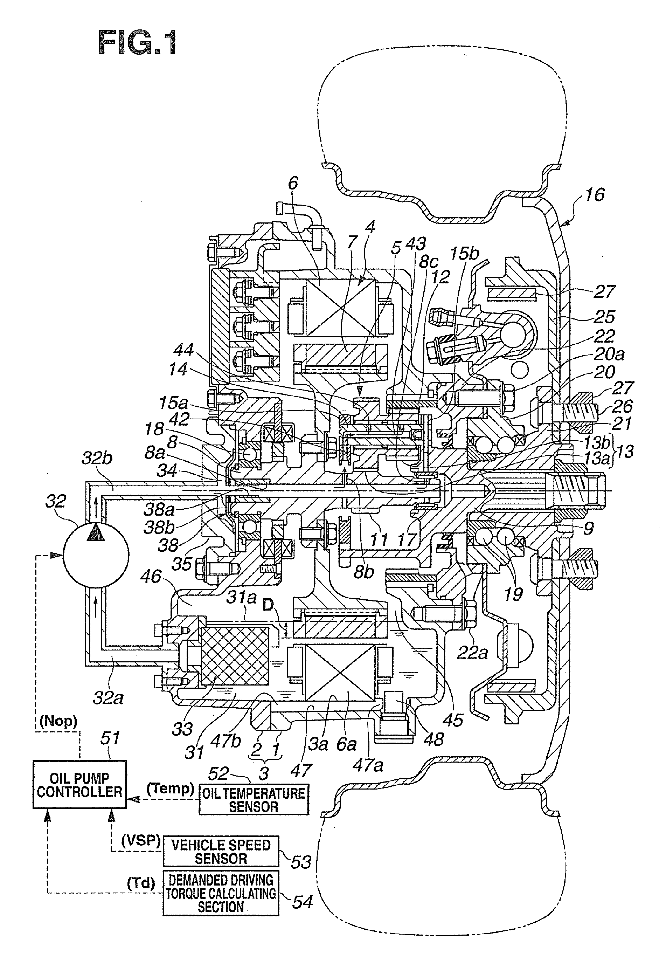

Fig. 1 shows a longitudinal cross sectional side view representing an in-wheel motor unit in which a lubrication control apparatus in a first preferred embodiment according to the present invention is equipped.

In Fig. 1, reference numeral 1 denotes a case main frame of an in-wheel motor unit, reference numeral 2 denotes a rear cover of a case main frame 1, a unit case 3 of an in-wheel motor unit is formed by means of a mutual uniting of a case main frame 1 and a rear cover 2.

In-wheel motor unit shown in Fig. 1 houses an electrically driven motor 4 and a planetary gear type speed reduction gear set 5 (hereinafter, referred simply as to a speed reduction gear set) within a unit case 3. Electrically driven motor 4 includes: an annular stator 6 which is fitted to an inner circumferential portion of case main frame 1 to be fixed; and a rotor 7 concentrically arranged onto an inner circumferential portion of annular stator 6 with a radial gap.

Speed reduction gear set 5 serves to perform a drive coupling between an input axle 8 and an output axle 9 opposed to each other and coaxially arranged with each other. Speed reduction gear set 5 includes: a sun gear 11; and a stationary ring gear 12 coaxially arranged with a deviation toward an axial line direction toward which ring gear 12 approaches to output axle 9; a stepped planetary pinion 13 (a stepped pinion) 13 meshed with sun gear 11 and ring gear 12; a pinion shaft 14 to rotatably support stepped planetary pinion 13; and carriers 15a, 15b supporting pinion shaft 14.

Input shaft 8 is integrally formed with sun gear 11 at an inner end near to output axle 9 and its input axle 8 is extended toward a backward direction directed to rear cover 2 from sun gear 11. Output axle 9 is extended from speed reduction gear set 5 toward an opposite direction (forward direction) from speed reduction gear set 5 and is projected from the opening of a front end (a right side of the drawing) of case main frame 1 and a road wheel 16 is coupled at this projection section as will be described later.

Coaxial abutting terminals of both of input axle 8 and output axle 9 are fitted mutually relatively rotatably and an intervention of a bearing 17 which may be constituted by a ball bearing to set an inter input/output axle bearing fitting section.

Locations of input axle 8 and output axle 9 spaced apart from this bearing 17 in the axial line direction are journalled on unit case 3 through a bearing 18 which may be constituted by the ball bearing and a bearing 19 which may be constituted by a double-row angular bearing.

It should be noted that bearing 19 is intervened between an inner periphery of an end lid 20 enclosing a front end opening of case main frame 1 and an outer periphery of a wheel hub 21 fitted to a projection section of output axle 9 projected from a front end opening of case main frame 1.

Electrically driven motor 4 couples its rotor connected to input axle 8 and its connected position is an axial line direction position between speed reduction gear set 5 and bearing 18.

Above-described ring gear 12 is fixed and installed within the front end opening of case main frame 1 in a whirl stop state and in a stopper state. When the stopper state is carried out, a seal adapter 22 serves as the stopper for ring gear 12 by means of a seal adapter 22. Seal adapter 22 is attached onto a front end opening of case main frame 1 and a bolt 20a serves to attach end lid 20 onto seal adapter 22.

Stepped planetary pinion 13 is a stepped pinion (a planetary gear) integrally provided with a large diameter gear section 13a meshed with sun gear 11 on input axle 8; and a small diameter gear section 13b meshed with ring gear 12 and which rolls stepped planetary pinion 13 along the inner periphery of ring gear 12.

This stepped planetary pinion 13 is arranged in a direction such that large diameter gear section 13a is positioned far away from output shaft 9 and small diameter gear section 13b is positioned near to output axle 9.

Stepped planetary pinion 13 is arranged at equal intervals in a circumferential direction with, for example, four per couple. Common carriers 15a, 15b rotatably support stepped planetary pinion 13 via a pinion shaft 14 maintaining this circumferential direction equal interval arrangement.

Carriers 15a, 15b and stepped planetary pinion 13 (a pinion shaft 14) are extended from output axle 9 toward input axle 8 side and is attached onto output axle 9.

Next, an essential of coupling road wheel 16 to output axle 9 will be described in details.

A brake drum 25 is integrally and concentrically coupled to wheel hub 21 and a plurality of wheel bolts 26 are embedded and penetrated through wheel hub 21 and brake drum 25 so as to be projected in an axial line direction of the in-wheel motor unit.

A wheel disk for the corresponding road wheel is tightly contacted against a bottom surface of brake drum 25 in order for wheel bolts 26 to be penetrated through bolt holes penetrated through the wheel disk and, in this state, wheel nuts 27 are tightly screwed into wheel bolts 26 so that an attachment of road wheel 16 to output axle 9 is carried out.

### <Action of the in-wheel motor unit>

When a power is supplied to stator 6 of electrically driven motor 4, a generated electromagnetic force causes rotor 7 of electrically driven motor 4 to be rotationally driven so that a rotational driving force is transmitted to sun gear 11 of speed reduction gear set 5 via input axle 8.

Thus, sun gear 11 causes stepped planetary pinion 13 to be rotated via a large diameter gear section 13a. At this time, fixed ring gear 12 functions as a reaction force receiver. Thus, stepped planetary pinion 13 performs a planetary motion so that small diameter section 13b rolls along ring gear 12.

The planetary motion of stepped planetary pinion 13 is transmitted to output shaft 9 via carriers 15a, 15b and output axle 9 is rotated in the same direction as input axle 8.

Speed reduction gear set 5 due to the above-described transmission action transmits a rotation from electrically driven motor 4 to input shaft 8 with the speed reduction determined by a ratio determined from a teeth number determined according to the teeth number of sun gear 11 and the teeth number of ring gear 12. The rotation of output axle 9 is transmitted to road wheel 16 via coupled wheel hub 21 and wheel bolts 26 so that this road wheel 16 can rotationally be driven.

It should be noted that another road wheel (not shown) at an opposite side in the leftward or rightward directions which constitutes a pair of road wheels with road wheel 16 is rotationally driven by the in-wheel motor unit of the same specification and the vehicle can be travelled according to the rotational drive at the same driving force of the left and right road wheels which constitute these pairs. When the vehicle is braked, rod wheel 16 is frictionally braked due to a press of brake shoe 27 onto an inner peripheral surface of a drum of brake drum 25.

### < Lubrication oil passage of in-wheel motor unit >

In the above-described in-wheel motor unit, it is necessary to lubricate speed reduction gear set 5 interposed between input axle 8 and output axle 9.

It should be noted that, since it is not necessary to lubricate electrically driven motor 4, a partitioning wall may be disposed between electrically driven motor 4 and speed reduction gear set 5 and within case main frame 1 to block a housing chamber of electrically driven motor 4 and another housing chamber of speed reduction gear set 5. However, in this case, it is not possible to mutually approach electrically driven motor 4 and planetary gear set 5 in order for electrically driven motor 4 and speed reduction gear set 5 to be overlapped in a radial direction of the in-wheel motor unit as shown in Fig. 1. Consequently, a mountability of the in-wheel motor unit due to an elongation of its axial direction is reduced.

Therefore, as shown in Fig. 1 in the first embodiment, the housing chamber of electrically driven motor 4 and the housing chamber of speed reduction gear set 5 are made in common to each other (standardized) and electrically driven motor 4 and speed reduction gear set 5 approach each other within the same chamber within case main frame 1 with electrically driven motor 4 and speed reduction gear overlapped in the radial direction, so that a size of the axial line direction can be reduced. Thus, the mountabiiity of the in-wheel motor unit can be improved.

In this embodiment, the following lubrication control apparatus can carry out the lubrication of speed reduction gear set 5, the lubrication of bearing 17 between input axle 8 and output axle 9, and the lubrication of bearing 18 between input axle 8 and a unit case 3.

First, a lubrication oil passage for the above-described purpose will, hereinafter, be explained. Lubricating oil 31 is retained at the lower part within unit case 3 and an electrically driven oil pump 32 is disposed at the lower part of unit case 3.

Oil pump 32 includes a suction port 32a and a discharge port 32b, suction port 32a being opened to a reserving section of oil 31 at the lower part of unit case 3 via an oil filter 33.

A lubricating oil storage quantity of oil 31 provides a quantity such that its level 31a is not lower than a suction port 32a regardless of a vibration of the vehicle and a gradient of the vehicle. Even if the vibration of the vehicle occurs and at the time of gradient of the vehicle, oil pump 32 can suck oil 31 from suction port 32a. The storage quantity of oil 31 for all of in-wheel motor driven road wheels is to be the same level as a static oil level 31a at the lower part of the in-wheel motor unit.

A circular oil gallery 34 which is concentric to input shaft 8 is formed on input shaft 8 and a discharge port 32b of oil pump 32 is passed to this oil gallery 34.

Oil gallery 34 is defined among an end surface of input axle 8 which is far away from output shaft 9, an end surface of bearing 18, and an oil cap 35 fitted into a rear cover 2 and which is opposed against both end surfaces of input axle 8 and bearing 18.

An oil guide 38 is intervened among end surface of input axle 8 which is far away from output axle 9, an end surface of bearing 18, and oil cap 35.

This oil guide 38 is a wholly circular plate form as clearly shown in Figs. 2(a) and 2(b). A guide envelope 38a is projected at the center section and a guide hole 38b is fitted on the peripheral section of oil guide 38.

Above-described oil guide 38 includes a guide envelope 38a inserted into a corresponding end of a hollow hole 8a disposed at a center of input axle 8 as shown in Fig. 1 and an opposing end of hollow hole 8a is opened within a mutual fitting empty portion of input axle 8 and output axle 9.

A radial oil hole 42 which extends toward an outer direction in the radial direction of carrier 15a is provided on carrier 15a and a radial oil hole 8b is formed in input axle 8 so as to be aligned in a row of this radial oil hole 42.

A radial outer end of radial oil hole 42 disposed on carrier 15a is passed through a hollow hole 43 at the center of pinion shaft 14.

An oil injection hole 44 which extends in a radial outward direction from hollow center hole 43 is disposed on pinion shaft 14 so that oil can be supplied to a lubrication required location of speed reduction gear set 5 by means of a centrifugal force from oil injection hole 44.

Input axle 8 further includes a radial oil hole 8c extended toward bearing 17 and intervened at the mutual fitting section of input and output axles 8, 9 and oil can be supplied to bearing 17 from this radial oil hole 8c.

An action of lubrication oil passage as will be described with reference to Figs. 1 and 2 will, hereinafter, be described below.

During an operation of the in-wheel motor unit, an oil pump 32 is driven in a case where it is necessary to lubricate both of bearings 17, 18 and speed reduction gear set 5.

When (corresponding) oil pump 32 is driven, a lubricating oil 31 at the lower part of in-wheel motor unit case 3 is sucked via a port 32a as shown in an arrow-mark in Fig. 1 and is sucked via a port 32a and discharged from port 32a and this discharge oil is, thereafter, reached to oil gallery 34.

During the rotational drive of road wheel 16 by means of the in-wheel motor unit, oil within a hollow hole 43 of pinion shaft 14 and within oil injection hole 44, upon receipt of a centrifugal force, is injected from oil injection hole 44 as denoted by an arrow-marked direction shown in Fig. 1 and is supplied to the lubrication required location of speed reduction gear set 5.

The oil injection quantity from related injection hole 44 is supplemented by oil directed from oil gallery 34 to pinion shaft hollow hole 43 via guide envelope 38a of oil guide 38, hollow hole 8a of input axle 8, radial hole 8b in the radial direction, radial oil hole 8b, and radial directional oil hole 42 and the supply of oil to speed reduction gear set 5 can continuously be carried out.

The stored oil within oil gallery 34 is, on the other hand, directed toward bearing 18 as shown in the arrow mark in Fig. 1 passing through a circumferential portion guide hole 38b disposed on oil guide 38 to perform lubrication for bearing 18.

Oil reached to hollow hole 8a of input axle 8 from oil gallery 34 via guide envelope 38a of oil guide 38 is simultaneously reached to bearing 17 between input and output axles 8, 9 via radial oil hole 8c as shown in the arrow mark shown in Fig. 1 so as to be served as the lubrication of bearing 17.

Speed reduction gear set 5 generates a metallic powder during a power transmission since speed reduction gear set 5 is a mechanical element and a metallic powder is mixed within oil circulated therein.

Oil in which the metallic powder is mixed and part of it is adsorbed on a permanent magnet within electrically driven motor 4 and an adhesion quantity of metallic powder onto electrically driven motor 4 is increased along a passage of time.

In this way, if the adhesion quantity of the metallic powder to electrically driven motor 4 is increased, a reduction of performance of electrically driven motor 4 is introduced so that a power performance of in-wheel motor unit type electric automotive vehicle is reduced.

During this circulation, part of metallic powder mixed in oil is adsorbed onto the permanent magnet within electrically driven motor 4 and, as the passage of time, the adhesion quantity of metallic powder onto electrically driven motor 4 is increased.

In this way, if the adhesion quantity of metallic powder to electrically driven motor 4 is increased, the reduction in the performance of electrically driven motor 4 is introduced and the dynamic performance of the in-wheel motor electric automotive vehicle is reduced.

The following countermeasure is taken in the in-wheel motor unit shown in Fig. 1 to solve the above-described problem.

An axial line directional groove 47 is disposed on a housing inner peripheral surface 3a to which a lower section 6a of stator 6 immersed into an oil reservoir is fitted and both ends 47a, 47b of axial line direction groove 47 are opened to spaces 45, 46 at both sides in the axial line direction of electrically driven motor 4. A traffic of oil between a housing space 45 at which speed reduction gear set 5 is placed and a housing space 46 at the opposite side of the housing space is carried out almost via axial line direction groove 47.

In addition, a permanent magnet 48 is fixed within housing (unit case) 3, permanent magnet 48 being in a proximity of opening end 47a of axial line direction groove 47 near to housing space 46 at which speed reduction gear set 5 is positioned.

It should be noted that stator 6 may be mold formed so that oil is not immersed into at least lower section 6a of stator 6.

It should be noted that the metallic powder mixed when oil passes through speed reduction gear set 5 is adsorbed on permanent magnet 37 when the metallic powder enters opening end 47a of axial line direction groove 47 from the oil reservoir within speed reduction gear set housing space 45 so that the metallic powder can be removed from oil.

Thus, the adhesion of the metallic powder onto electrically driven motor 4 can be prevented and the performance of electrically driven motor 4 due to the adhesion of metallic powder onto electrically driven motor 4 is reduced so that the above-described problem can be avoided.

### < lubrication control of the in-wheel motor unit>

When the above-described lubrication of the in-wheel motor unit (planetary gear set 5 and bearings 17, 18) is carried out, oil pump controller 51 shown in Fig. 1 controls the above-described lubrication via a driving control of (corresponding) oil pump 32 as follows.

Oil pump controller 51 inputs: a signal from oil temperature sensor 52 detecting an oil temperature Temp of lubricating oil 31; a signal from vehicle speed sensor 53 detecting a vehicle speed VSP; and a signal from a demanded driving torque calculating section 54 calculating a demanded driving torque Td of the vehicle.

Demanded driving torque calculating section 54 does not only calculate demanded driving torque Td but also calculate demanded driving torque Td irrespective of the driver's intention such as a creep torque and so forth.

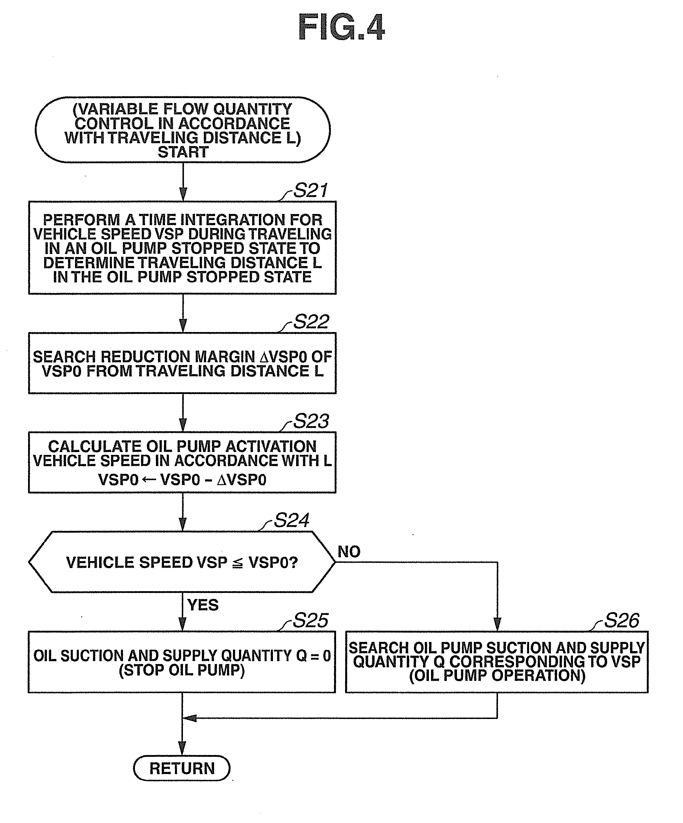

Oil pump controller 51 executes a control program shown in Figs. 3 and 4 on a basis of the above-described input information and drivingly controls (corresponding) oil pump 32 so that the suction and supply quantity of oil by means of this oil pump 32 is as illustrated in Fig. 5.

At a step S11 in Fig. 3, oil pump controller 51 determines whether vehicle speed VSP is equal to or higher than a set vehicle speed VSP1 shown in Fig. 5.

This setting vehicle speed VSP1 is a lowest vehicle speed (for example, 30km/h) of a high vehicle speed region at which the oil stirring resistance to rotor 7 immersed into oil 31 as shown in D of Fig. 1 due to the large diameter of rotor 7 exceeds an allowance level (almost negligible level). In this high vehicle speed region, oil level 31a at the lower part of in-wheel motor unit case is different between right and left road wheels. At this time, oil immersion quantity D of rotor 7 between the right and left road wheels, namely, the oil stirring resistance to rotor 7 is largely different so that a large driving force difference between the right and left road wheels is generated and a traveling stability of the vehicle becomes worsened.

It should be noted that Fig. 6 is a characteristic graph representing how an oil temperature Temp within the in-wheel motor unit is varied in accordance with oil immersion quantity D of rotor 7 in a non-load state under a certain vehicle speed VSP equal to or higher than set vehicle speed VSP1.

As oil immersion quantity D of rotor 7 becomes larger, a time variation rate of oil temperature Temp becomes abrupt. This means that, as oil immersion quantity D of rotor 7 becomes larger, the oil stirring resistance to rotor 7 becomes larger so that a reduction in the road wheel driving force due to a power loss is severe.

Hence, when a high vehicle speed region (VSP ≧ VSP1) at which the oil stirring resistance is in excess of the allowance level, oil levels 31a of the left and right in-wheel motor units are often made different from each other. At this time, an oil stirring resistance difference to rotor 7 becomes large so that the large driving force difference between the right and left road wheels is generated and such a problem that a traveling stability of the vehicle becomes worsened occurs.

In a case where vehicle speed VSP at step S11 is determined to be equal to or larger than set vehicle speed VSP1, at a step S12 of Fig. 3, oil pumps 32 in the left and right in-wheel motor units are drivingly controlled so that oil suction and supply quantities Q are maintained to provide constant flow quantity Qconst shown in Fig. 5. Hence, step S12 corresponds to oil pump driving control means according to the present invention.

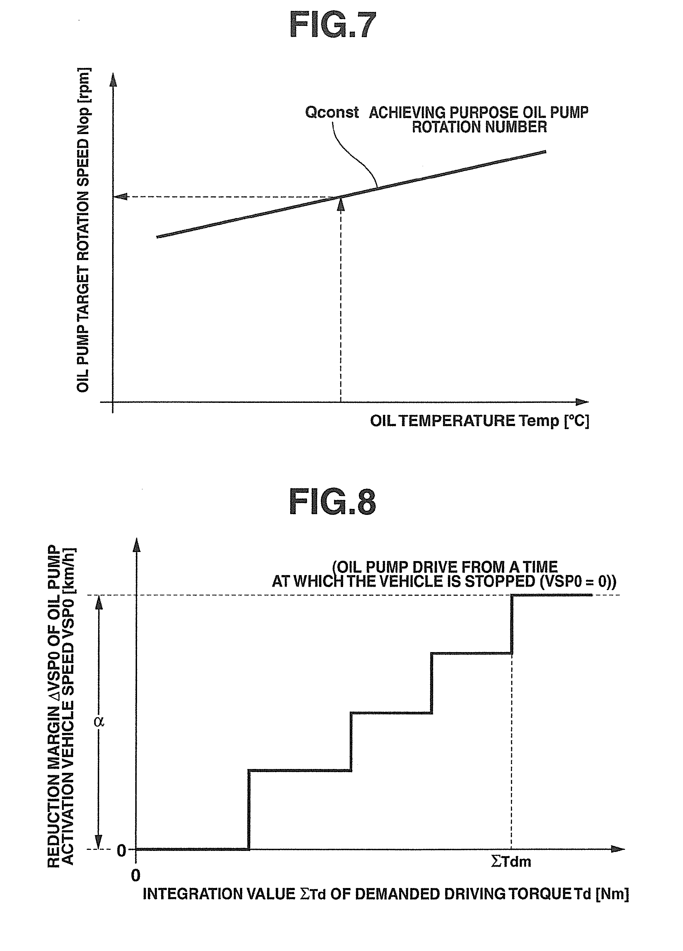

Oil pump controller 51 when this drive control is carried out derives an oil pump target revolution number Nop from oil temperature Temp on a basis of the constant flow quantity (Qconst) achieving characteristic, for example, in Fig. 7 with this characteristic taken into consideration since oil suction and supply quantity Q is varied in accordance with oil temperature Temp even under the same rotation speed of (each) oil pump 32, is commanded to oil pump 32 (each oil pump 32 of the left and right in-wheel motor units) as shown in Fig. 1 so that (corresponding) oil pump 32 is drivingly controlled at constant flow quantity Qconst shown in Fig. 5 in the high vehicle speed region (VSP ≧ VSP1) under any oil temperature Temp according to the driving control described above.

The above-described constant flow quantity Qconst is a unit oil quantity required at minimum to lubricate speed reduction gear set 5 within the (corresponding) in-wheel motor unit and is set to an oil quantity at the time of the vehicle speed at which, for example, this unit required oil quantity is largest.

In a case where (each) oil pump 32 is drivingly controlled so that oil suction supply quantities Q by means of oil pumps 32 of the left and right in-wheel motor units are maintained at constant flow quantities Qconst, oil levels 31a at the lower parts within the left and right in-wheel motor units are continued to be the same even during the operations of oil pumps 32 due to the same static oil levels at the lower parts of left and right in-wheel motor units as described above.

Since oil levels 31a at the lower parts of left and right in-wheel motor units are maintained at the same level even during the operation of oil pumps 32, the stirring resistances to rotor 7 within the left and right in-wheel motor units in the high vehicle speed region (VSP ≧ VSP1) exceeding the allowance level are maintained to be the same so that the driving force difference between the left and right road wheels is not generated and the above-described problem of worsening the traveling stability can be avoided.

In addition, since constant flow quantity Qconst described above shown in Fig. 5 is a minimum unit demanded oil quantity required to lubricate speed reduction gear set 5 within each of the in-wheel motor units. Hence, while speed reduction gear set 5 is lubricated as demanded by a minimum oil required to lubricate speed reduction gear set 5 (a minimum pump consumption electric power) within each of the in-wheel motor units, the above-described problem can be achieved.

In a case where the vehicle speed (VSP) is determined to be in a low vehicle speed region (VSP < VSP1) at step S11 of Fig. 3, control is advanced to a step S13 which corresponds to the oil pump driving control means according to the present invention and (each) oil pump 32 is under a variable flow quantity control as will be described hereinbelow.

The reason is that, in a case of the vehicle speed which is in the low vehicle speed region (VSP < VSP1), the rotational speed of rotor 7 is slow and the oil stirring resistance is equal to or below the allowance level, so that the problem on the traveling stability described above is not generated. In addition, the reason is that a degree of lubrication demand is low so that, from the viewpoint of the electric power consumption and the oil pump noise as will be described later, the operation of oil pump(s) 32 is avoided as least as possible or the number of rotations of the oil pump(s) is suppressed as low as possible.

Hereinafter, the oil pump noise will be explained. Each oil pump 32 is not installed at the inner part of the vehicle body in which the noise countermeasure is possible but installed in the in-wheel motor unit exposed to the outside of the vehicle body. Hence, the noise countermeasure is impossible or difficult to be attained. Especially, during a vehicle stop in which the in-wheel motor driven vehicle is in a stopped state in which no sound state occurs or in a low vehicle speed region (VSP < VSP1) in which no sound traveling occurs, the operation sound of oil pump(s) 32 gives a sound having the sense of discomfort for persons surrounding the outside of the vehicle. Hence, the rotation speed of (each) oil pump 32 is reduced as low as possible and it is preferable to make (each) oil pump 32 in a non-operation state as least as possible. From the viewpoint of the traveling distance per unit power (electric power consumption), it is preferable to do so.

Therefore, in the variable flow quantity control of (each) oil pump 32 in the low vehicle speed region (VSP < VSP1) executed at step S13, in a case where demanded driving torque Td is 0 and traveling distance L is 0 in the oil pump stopped state, as denoted as a solid line characteristic (basic characteristic) at the low vehicle speed region (VSP < VSP1), (each) oil suction and supply quantity Q by means of (corresponding) oil pump 32 is set to 0 to keep (each) oil pump 32 in a stopped state until vehicle speed VSP is raised to an oil pump activation vehicle speed VSPO (corresponds to a predetermined vehicle speed according to the present invention). During a time duration at which vehicle speed VSP is raised from oil pump activation vehicle speed VSP0 to reach to set vehicle speed VSP1, (each) oil pump 32 is drivingly controlled for oil suction supply quantity Q to be increased from zero to constant flow quantity Qconst gradually in a second order curved line shape.

Since, as appreciated from above-described constant flow quantity Qconst, oil levels 31a at the lower parts of left and right in-wheel motor units are made equal to each other, the oil suction and supply quantity of (each) oil pump 32 (a predetermined quantity according to the present invention) and make correspondent on the minimum unit demanded (required) oil quantity required to lubricate speed reduction gear set 5 within the in-wheel motor unit as will be described hereinabove.

When the above-described drive control of oil pump(s) 32 in the low vehicle speed region (VSP < VSP1) is carried out, oil pump controller 51 determines oil pump target rotation speed Nop to achieve oil suction supply quantity Q which is varied from zero to constant flow quantity Qconst as described above in the same thinking as described above with reference to Fig. 7 and commanded to oil pump suction and supply quantity as shown in Fig. 1. According to the driving control described above, regardless of oil temperature Temp, (each) oil pump 32 can be controlled along a characteristic denoted by a solid line in Fig. 5 in the low vehicle speed region (VSP < VSP1).

It should, herein, be noted that oil pump activation vehicle speed VSPO is defined as a vehicle speed when a remaining oil stored within a lubrication oil passage (oil suction and supply passage) from oil gallery 34 to oil injection hole 44 is started to be injected by means of a centrifugal force in response to the start of the road wheel drive through the in-wheel motor unit and the remaining oil has all disappeared or defined as the vehicle speed when the remaining oil becomes a quantity below a predetermined quantity to generate a failure in a lubrication (in this specification, referred to as a vehicle speed at which the remaining oil becomes disappeared).

The reason is that, if (each) oil pump 32 is left stopped even after reaching to oil pump activation vehicle speed VSPO defined as described above, the lubrication oil to speed reduction gear set 5 is temporarily not supplied and there is a possibility of introducing a temporary failure in speed reduction gear set 5.

However, when demanded driving torque Td becomes larger than 0, demanded lubrication oil quantity of speed reduction gear set 5 becomes increased, oil pump activation vehicle speed VSPO is reduced as shown in a broken line characteristic in Fig. 5, and it becomes necessary to activate (each) oil pump 32 at an early timing. For example, when, so-called, a hill hold occurs at which the vehicle is stopped according to a torque of electrically driven motor 4 when the vehicle is traveling on an ascending slope, speed reduction gear set 5 is in the torque transmission state. Hence, it is necessary to lubricate speed reduction gear set 5. Even if vehicle speed VSP is in the vehicle stopped state, the demanded lubrication oil quantity of speed reduction gear set 5 is as denoted by Qo shown in Fig. 5 even if vehicle speed VSP is in the stopped state of 0.

In this embodiment, as a map related to a reduction margin of oil pump activation vehicle speed VSPO shown by Δ VSP0 in Fig. 5, a map related to reduction margin Δ VSP0 of oil pump activation vehicle speed VSPO which becomes large, for example, as shown in Fig. 8, in accordance with an increase in an integrated value ΣTd of demanded driving torque Td is previously determined by experiments or so and prepared.

It should be noted that reduction margin Δ VSP0 of oil pump activation vehicle speed VSPO has a maximum value α is VSPO as apparent from Fig. 5 and the map in Fig. 8 means that oil pump activation vehicle speed VSPO provides 0 since Δ VSP0 = α when integration value Σ Td of the demanded driving torque is equal to or larger than a certain value (set torque) Σ Tdm and (each) oil pump 32 is driven from the vehicle stopped state to enable a satisfaction of the demand when, for example, the hill-hold occurs, as described above.

Oil pump controller 51 executes the driving control for (corresponding) oil pump 32 such that oil suction and supply quantity Q is varied along a solid line characteristic in Fig. 5 according to the above-described control in a case where integration value ΣTd of demanded driving torque Td is 0, when executing step S13 in Fig. 3 in the low vehicle speed region (VSP < VSP1).

However, if integration value ΣTd of demanded driving torque Td exceeds 0, reduction margin Δ VSP0 of oil pump activation vehicle speed VSPO which accords with integration value ΣTd of demanded driving torque Td from the map shown in Fig. 8 is determined and (each) oil pump 32 is drivingly controlled so as to achieve the variation characteristic of oil suction and supply quantity Q as denoted by a broken line in Fig. 5 so that (VSPO - Δ VSP0) is the new oil pump activation vehicle speed when ΣTd >0.

On the other hand, if traveling distance L in the oil pump stopped state becomes larger than 0 due to the start of the vehicle, the remaining oil quantity is reduced due to the injection according to the centrifugal force and becomes disappeared to a degree such that the lubrication failure of the in-wheel motor unit occurs. Hence, oil pump activation vehicle speed VSP0 is reduced as denoted by the broken line characteristic in Fig. 5 in accordance with traveling distance L in the oil pump stopped state and it is necessary to activate (each) oil pump 32 when the remaining oil quantity becomes disappeared (empty).

In this embodiment, the map related to reduction margin VSPO of oil pump activation vehicle speed VSPO which becomes large as shown in, for example, Fig. 9 in accordance with the increase in traveling distance L in the oil pump stopped state is previously determined according to the experiments or so on and prepared.

It should be noted that the map shown in Fig. 9 means that oil pump(s) 32 is driven when oil pump activation vehicle speed VSPO provides 0 since Δ VSP0 = α when traveling distance L in the oil pump stopped state is equal to or larger than a certain value Lm. Thus, regardless of the nullification of the remaining oil described above due to the fact that L ≧ Lm and, in spite of the fact that traveling distance is equal to or below a predetermined quantity, oil pump(s) 32 is left in the non-operation state so that the in-wheel motor unit(s) does not fall in the lubrication failure state.

Then, oil pump controller 51 executes step S13 in Fig. 3 in the low vehicle speed region (VSP < VSP1) to drivingly control oil pump(s) 32 in accordance with traveling distance L in the oil pump stopped state. This is executed in the following way on a basis of Fig. 4.

At a step S21 in Fig. 4, oil pump controller 51 determines a traveling distance L in the oil pump stopped state by a time integration of vehicle speed VSP during the traveling of the oil pump stopped state. As shown in Fig. 10, in a two dimensional coordinate with a traveling time in the oil pump stopped state taken as a lateral axis and with a time integration value of vehicle speed VSP during the traveling time in the oil pump stopped state taken as a longitudinal axis, the time integration value of vehicle speed VSP at a time of traveling time in the oil pump stopped state is denoted by an area of hatching in Fig. 10 and represents traveling distance L in the oil pump stopped state.

The area illustrated by hatching in Fig. 10 denotes a case where traveling distance L in the oil pump stopped state is Lm in Fig. 9.

At the next step S23, oil pump controller 51 subtracts reduction margin Δ VSP0 from oil pump activation vehicle speed VSPO from basic oil pump activation vehicle speed VSPO shown in Fig. 5 to determine a new oil pump activation vehicle speed VSP0 (= VSP0 - Δ VSP0) which accords with traveling distance L in the oil pump stopped state.

At a step S24, oil pump controller 51 determines whether vehicle speed VSP is equal to or below oil pump activation vehicle speed VSP0 (= VSP0 - Δ VSP0) corresponding to traveling distance L or in excess of oil pump activation vehicle speed VSPO (= VSP0 -ΔVSP0).

If VSP ≦ VSP0, oil pump controller 51 stops oil pump(s) 32 by determining oil suction and supply quantity Q to be zero at a step S25.

If VSP < VSPO, at a step S26, oil pump controller 51 searches and determines oil suction and supply quantity Q by means of corresponding oil pump 32 which accords with present vehicle speed VSP from the oil suction and supply quantity characteristic Q by means of corresponding oil pump 32 so that corresponding oil pump 32 is driven to achieve oil suction and supply quantity Q.

As described hereinabove, oil pump(s) 32 is drivingly controlled to achieve the oil suction and supply quantity (quantities) in accordance with traveling distance L in the oil pump stopped state in the low vehicle speed region (VSP < VSP1) in Fig. 5 when the oil pump driving control shown in Fig. 4 is carried out.

Hence, during a time duration from the time at which the vehicle is started in the oil pump stopped state to the time at which the vehicle speed reaches to predetermined vehicle speed VSP0 (which is different according to traveling distance L in the oil pump stopped state and VSPO = 0 when L ≧ Lm) at which the remaining oil is scattered in all directions and becomes disappeared, oil pump(s) 32 is stopped and oil pump(s) 32 can be activated when reaching to the predetermined vehicle speed (VSPO) at which the remaining oil is scattered in all directions and becomes disappeared.

### < Effect of the first embodiment>

In the lubrication control of the in-wheel motor unit(s) carried out in this embodiment, oil pump(s) 32 is left stopped during the time duration from the time at which the vehicle is started to be traveled in the oil pump stopped state as described above to the time at which the vehicle speed reaches to predetermined vehicle speed VSPO at which the remaining oil is scattered in all directions and becomes disappeared. Hence, an wasteful operation of oil pump(s) 32 can be prevented in the low vehicle speed region equal to or below predetermined vehicle speed VSPO including the stop of the vehicle.

Hence, the operation sound of oil pump(s) 32 can be avoided from being noisy sound during the vehicle stop or in the low vehicle speed region which is in the no sound state or in almost no sound travel. In addition, the worsening of the traveling distance per unit power (electric power consumption) due to the wasteful operation of oil pump(s) 32 during the vehicle stop or in the low vehicle speed region can be avoided.

On the other hand, when vehicle speed VSP has reached to predetermined vehicle speed VSPO, oil pump(s) 32 is activated. Hence, a lubrication failure of the corresponding in-wheel motor unit can be prevented from occurring since there are no cases where oil pump(s) 32 are not activated in spite of the fact that the remaining oil in the oil suction and supply passage is scattered in all directions and becomes disappeared.

Then, since the oil pump activation vehicle speed is reduced in accordance with traveling distance L in the oil pump stopped state, oil pump(s) 32 is activated at the vehicle speed lower than a basic oil pump activation vehicle speed VSPO shown in Fig. 5 and the following effects can be achieved.

In other words, if traveling distance L of the vehicle in the oil pump stopped state becomes long, the remaining oil within the oil suction and supply passage becomes slightly scattered in all directions and at last becomes disappeared due to the continuation of the slight scattering by means of a small centrifugal force so that the corresponding in-wheel motor unit cannot be lubricated any more as desired even in the vehicle speed further lower than basic oil pump activation vehicle speed VSPO shown in Fig. 5.

However, as described above in this embodiment, when traveling distance L of the vehicle in the oil pump stopped state is long, oil pump(s) 32 is activated at the vehicle speed lower than basic oil pump activation vehicle speed VSPO shown in Fig. 5. Hence, an event of the lubrication failure which is generated in a case where traveling distance L of the vehicle in the oil pump stopped state is long can be avoided.

In this embodiment, since traveling distance L in the oil pump stopped state is determined according to the time integration of vehicle speed VSP during the traveling in the oil pump stopped state as described above with reference to Fig. 10 at step S21 in Fig. 4. Hence, a traveling distance meter (odometer) to measure traveling distance L is not needed and is very advantageous in terms of cost.

Furthermore, after the vehicle speed has reached to predetermined vehicle speed VSPO, oil pump(s) 32 is drivingly controlled so that oil suction and supply quantity Q from (corresponding) oil pump 32 is gradually increased in accordance with the rise in vehicle speed VSP in the low vehicle speed region below set vehicle speed VSP1 at which the stirring resistance of oil 31 at the lower part within the in-wheel motor unit case is not in excess of the allowance level. Hence, an abrupt increase of the pump driving load after the activation of oil pump(s) 32 can be avoided so that the worsening of the durability of oil pump(s) 32 can be prevented.

In addition, oil pump(s) 32 is drivingly controlled in such a way that oil suction and supply quantity Q at a time of rise in vehicle speed VSP to reach to set vehicle speed VSP1 provides predetermined quantity Qconst which give the oil levels is mutually at the same level as for the lower parts of the left and right in-wheel motor units. Hence, during a transfer from the low vehicle speed region (VSP < VSP1) to the high vehicle speed region (VSP ≧VSP1), the oil levels at the lower parts within the cases of the left and right in-wheel motor units can be set to be equal to each other. Thus, the problem such that a large left and right road wheel driving force difference is generated at the time of the transfer to the high vehicle speed region (VSP ≧ VSP1) to worsen the traveling (running) stability can be avoided.

In the high speed region (VSP ≧ VSP1) of the vehicle speed, oil pumps 32 are drivingly controlled for oil suction and supply quantity (quantities) Q to be maintained at above-described predetermined quantity (quantities) Qconst. Hence, even during the operation of oil pump(s) 32, oil levels 31a at the lower parts within the left and right in-wheel motor units can be maintained at the same level even during the operation of oil pump(s) 32.

Hence, even if the oil stirring resistance to rotor 7 is in the high vehicle speed region (VSP ≧ VSP1) exceeding the allowance level, the oil stirring resistance to rotor 7 within the left and right in-wheel motor units is maintained at the same value so that the driving force difference between the left and right road wheels is not generated and the problem such that the traveling stability of the vehicle becomes worsened can be avoided.

Then, since this effect is achieved through the simple constant flow quantity control by means of (each) oil pump 32, it is considerably advantageous in terms of cost.

In addition, above-described constant flow quantity Qconst in Fig. 5 provides the minimum unit required oil quantity required to lubricate speed reduction gear set 5 within the corresponding in-wheel motor unit. Hence, while speed reduction gear set 5 is lubricated with minimum oil as required (a minimum pump consumption power), the above-described effect can be achieved.

### < Structure of a second embodiment >

Next, referring to Fig. 11, a second preferred embodiment according to the present invention will be described with reference to Figs. 1 to 10. It should be noted that the explanation of a part or parts common to the above-described first embodiment will suitably be omitted.

In this second embodiment, above-described setting torque Σ Tdm is a lower limitation value of demanded driving torque Td required to activate (each) oil pump 32 from the vehicle stopped state. Since Σ Td ≧ Σ Tdm, oil suction and supply quantity Q₀ during the vehicle stopped state shown in Fig. 5 in a case where oil pump(s) 32 is activated from the vehicle stopped state is made correspondence to the lubrication oil quantity required for the in-wheel motor unit due to the presence of demanded driving torque Td at the time of the vehicle stopped state. Thus, as demanded driving torque Td (its integration value Σ Td) becomes larger (in more details, as a torque difference Σ Td - Σ Tdm becomes larger), oil suction and supply quantity Q₀ at the time of the stop of the vehicle shown in Fig. 5 becomes increased due to the presence of demanded driving torque Td at the time of the vehicle stop.

Oil pump controller 51 executes step S13 in Fig. 3 in the low vehicle speed region (VSP < VSP1) to perform the driving control of oil pump(s) 32 in the second embodiment in accordance with integration value Σ Td of demanded driving torque Td. At this time, the following is executed on a basis of Fig. 11.

At a step S31 in Fig. 11, demanded driving torque Td is integrated with respect to time when the traveling in the oil pump stopped state is started to determine integrated value Σ Td of demanded driving torque Td.

At the next step S32, on a basis of the map corresponding to Fig. 8, reduction margin Δ VSP0 of oil pump activation vehicle speed VSPO is searched from time integration value of Σ Td of demanded deriving torque Td determined at step S31.

At the next step S33, oil pump controller 51 subtracts above-described basic reduction margin Δ VSP0 from basic oil pump activation vehicle speed VSPO shown in Fig. 5 to determine a new oil pump activation vehicle speed VSP0 (= VSP0 - Δ VSP0) which accords with time integration value Σ Td of demanded driving torque Td.

At the next step S34, oil pump controller 51 checks to see whether a new oil pump activation vehicle speed VSPO (= VSP0 - Δ VSP0) in accordance with time integration value of Σ Td of demanded driving torque Td is " 0 " or larger than " 0 ".

If VSPO (= VSP0 - Δ VSP0) is " 0 ", the routine goes to a step S35. At step S35, oil pump controller 51 searches and determines oil suction and supply quantity Q₀ (refer to Fig. 5) which accords with demanded driving torque Td (or its integration value Σ Td) for the case when VSPO = 0 and oil pump(s) 32 is drivingly controlled to achieve Q = Q₀.

In a case where a new oil pump activation vehicle speed VSPO (= VSPO - Δ VSP0) which accords with time integration value Σ Td of demanded driving torque Td is determined to be larger than " 0 " at step S34, the routine goes to a step S36. At step S36, oil pump controller 51 checks to see whether vehicle speed VSP is equal to or below new oil pump activation vehicle speed VSPO (= VSP0 - Δ VSP0) which accords with time integration value Σ Td of demanded driving torque Td or higher than new oil pump activation vehicle speed VSP0.

At step S36, if vehicle speed VSP is determined to be higher than new oil pump activation vehicle speed VSPO (= VSP - Δ VSP0) which accords with time integration value Σ Td of demanded driving torque Td, the vehicle speed is before the oil pump activation as appreciated from Fig. 5. At a step S37, when oil suction and supply quantity Q by means of oil pump(s) 32 is determined as 0 to stop oil pump (s) 32.

In a case where vehicle speed VSP is determined to be higher than new oil pump activation vehicle speed VSPO (= VSP0 - Δ VSP0) which accords with time integration value Σ Td of demanded driving torque Td, the vehicle speed is the vehicle speed after the oil pump activation as appreciated from Fig. 5. Hence, at a step S38, oil pump suction and supply quantity Q by means of (corresponding) oil pump 32 is determined as the oil suction and supply quantity corresponding to vehicle speed VSP and (corresponding) oil pump 32 is drivingly controlled for oil suction and supply quantity Q corresponding to vehicle speed VSP to be achieved.

As described hereinabove, when the driving control of oil pump(s) 32 shown in Fig. 11 which accords with demanded driving torque Td (time integration value Σ Td) is executed, oil pump(s) 32 is drivingly controlled so that the oil suction and supply quantity characteristic in the low vehicle speed region (VSP < VSP1) shown in Fig. 5 is varied sequentially from a solid line characteristic to broken line characteristics at the left side of Fig. 5 as demanded driving torque Td (time integration value Σ Td) becomes larger from zero to achieve the oil suction and supply quantity characteristic which accords with demanded driving torque Td (time integration value Σ Td).

That is to say, in a case where integration value Σ Td of demanded driving torque indicates 0, oil pump(s) 32 is drivingly controlled for oil suction and supply quantity Q to be varied along the solid line characteristic of Fig. 5 in a case where integration value Σ Td of demanded driving torque Td is 0 and, in a case where integration value Σ Td of demanded driving torque Td is in excess of 0, oil pump controller 51 determines reduction margin Δ VSP0 of oil pump activation vehicle speed VSPO in accordance with integration value Σ Td of demanded driving torque Td from the map shown in Fig. 8 and performs the driving control of oil pump(s) 32 to achieve the variation characteristic of oil suction and supply quantity Q as illustrated in the broken line in Fig. 5 with (VSPO - Δ VSP0) as the new oil pump activation vehicle speed when Σ Td >0.

### <Effect of the second embodiment>

In the second embodiment, in a case where demanded driving torque Td of the vehicle is present, oil pump(s) 32 are activated from the vehicle speed lower than predetermined vehicle speed VSPO including the stop of the vehicle in accordance with demanded driving torque Td (its integration value ΣTd) irrespective of the vehicle speed rise condition (VSP ≧ VSP0). Hence, oil pump(s) 32 can suck and supply oil having a quantity responding to a degree of demand of the lubrication of the in-wheel motor unit which becomes higher in accordance with demanded driving torque Td (its integration value Σ Td). Hence, the problem such that the oil quantity of the lubrication becomes insufficient for demanded driving torque Td is not generated so that the lubrication as demanded can be performed which accords with demanded driving torque Td.

In addition, in this embodiment, the driving control of the oil pump(s) 32 in accordance with demanded driving torque Td (its time integration value Σ Td) is performed by reducing predetermined vehicle speed VSPO to activate oil pump(s) 32 as demanded driving torque Td (its time integration value Σ Td) becomes larger and setting predetermined vehicle speed VSPO to zero when demanded driving torque Td (its time integration value Σ Td) is equal to or larger than set torque Σ Tdm. Hence, a control accuracy can be increased and the above-described effects can further be remarkable according to the control with predetermined vehicle speed VSPO as a reference.

Furthermore, in a case where, in response to a case where Σ Td ≧ Σ Tdm, oil pump(s) 32 is activated from the vehicle stopped state, oil suction and supply quantity Q₀ (refer to Fig. 5) in a case where (each) oil pump 32 is activated from the vehicle stopped state is defined to be larger in accordance with a magnitude of an excessive quantity of demanded driving torque Σ Td with respect to setting torque Σ Tdm. Hence, the demanded oil suction and supply quantity at the time of the vehicle stop in accordance with demanded driving torque Td (its integration value Σ Td) is achieved. Thus, in a case where the lubrication oil quantity becomes insufficient with respect to demanded driving torque Td. Thus, during the hill-hold driving of the vehicle, the lubrication as demanded in accordance with demanded driving torque Td can be performed.

In addition, when the lubrication control in accordance with above-described demanded driving torque Td is performed, in place of demanded driving torque Td itself, oil pump(s) 32 using time integration value Σ Td is drivingly controlled as described above. Hence, this control becomes more practical so that the above-described effect can be assured.

Furthermore, after the vehicle speed has reached to predetermined vehicle speed VSPO, as shown in Fig. 5, oil pump(s) 32 is drivingly controlled so as to be gradually increased as the rise in vehicle speed VSP of oil suction and supply quantity Q from (each) oil pump 32 in a low speed region lower than a set vehicle speed VSP1 at which the stirring resistance of oil 31 at a lower part of in-wheel motor unit case. Thus, the abrupt increase in the pump driving load after the activation of (each) oil pump 32 can be avoided and the worsening of the durability of (each) oil pump 32 can be prevented.

In addition, oil pump(s) 32 is drivingly controlled for oil suction and supply quantity Q to be the constant quantity Qconst by which the oil levels at the lower parts of the left and right in-wheel motor units are made equal to each other when the vehicle speed is increased and has reached to set vehicle speed VSP1. Hence, during the transition of the vehicle speed from low vehicle speed region (VSP <VSP1) to high vehicle speed region (VSP ≧ VSP1), the oil levels at the lower parts of the left and right in-wheel motor unit cases can be set to mutually be the same so that the problem such that the large left and right road wheel driving force differences are generated and the traveling stability is worsened at the time of the transition to high vehicle speed driving region (VSP ≧ VSP1) of the vehicle speed can be avoided.

Then, in the high vehicle speed region (VSP ≧ VSP1), oil pump(s) 32 is drivingly controlled to maintain oil suction and supply quantity Q at predetermined quantity Qconst so that, even during the operation of (each) oil pump 32, oil levels 31a at the lower parts of the left and right in-wheel motor units are continued to remain the same. Hence, even if the vehicle speed is in he high vehicle speed region (VSP ≧ VSP1) at which each of the oil stirring resistances to rotor 7 exceeds the allowance level, the oil stirring resistances to rotor 7 within the left and right in-wheel motor units are maintained to be the same. Thus, the driving force difference between the left and right road wheels is not generated and the problem such that the traveling stability of the vehicle becomes worsened can be avoided.

Then, its effect can be achieved by the simple constant flow quantity control of oil pump(s) 32 and, therefore, it is considerably advantageous in terms of cost.

In this addition, above-described constant flow quantity Qconst in Fig.5 is the minimum unit required oil quantity required to lubricate speed reduction gear set 5 within each of the in-wheel motor units. Hence, while speed reduction gear set 5 is lubricated as requested by a minimum oil (a minimum pump consumed electric power), the above-described effect can be achieved.

### <Other embodiments>

It goes without saying that although, in the above-described embodiment, when the above-described control is executed, time integration value Σ Td is used in place of demanded driving torque Td itself, demanded driving torque Td itself may be used.

In addition, in the above-described embodiment, basic predetermined vehicle speed VSPO to activate oil pump(s) 32 is predefined as an initial value as shown in Fig. 5 and this predetermined vehicle speed VSPO is reduced by quantity Δ VSP0 shown in Fig. 8 which accords with a magnitude of demanded driving torque Td (its time integration value Σ Td). However, oil pump(s) 32 may be activated when demanded driving torque Td (its integration value Σ Td) indicates a predetermined value.

## Claims

1. A lubrication control apparatus for in-wheel motor units for use in an in-wheel motor driven vehicle in which road wheels are driven by means of the individual in-wheel motor units in order for the vehicle to be travelable and in which individual oil pumps lubricate within the in-wheel motor units through oil sucked and supplied from lower parts of respective in-wheel motor unit cases, the lubrication control apparatus comprising: oil pump driving control means for drivingly controlling the oil pumps to stop the oil pumps when the vehicle is in a vehicle stopped state and to activate the oil pumps when a vehicle speed has reached to a predetermined vehicle speed.

2. The lubrication control apparatus for the in-wheel motor units for use in the in-wheel motor driven vehicle as claimed in claim 1, wherein the predetermined vehicle speed to activate the oil pumps is a vehicle speed at which a remaining oil in an oil suction and supply passage to suck and supply oil is scattered in all directions and becomes disappeared.

3. The lubrication control apparatus for the in-wheel motor units for use in the in-wheel motor driven vehicle as claimed in either claim 1 or 2, wherein the oil pump driving control means sets the predetermined vehicle speed in accordance with a traveling distance of the vehicle in the oil pump stopped state.

4. The lubrication control apparatus for the in-wheel motor units for use in the in-wheel motor driven vehicle as claimed in claim 3, wherein the oil pump driving control means determines the vehicle traveling distance in the oil pump stopped state by an integration of the vehicle speed with respect to time during a travel in the oil pump stopped state to contribute on the setting of the predetermined vehicle speed.

5. The lubrication control apparatus for the in-wheel motor units for use in the in-wheel motor driven vehicle as claimed in any one of the preceding claims 1 through 4, wherein the oil pump driving control means drivingly controls the oil pumps such that oil suction and supply quantities from the oil pumps are gradually increased as the vehicle speed is increased in a low vehicle speed region which is lower than a set vehicle speed at which a stirring resistance of oil at each of the lower parts within the in-wheel motor unit cases does not exceed an allowance level after the vehicle speed has reached to the predetermined vehicle speed.

6. The lubrication control apparatus for the in-wheel motor units for use in the in-wheel motor driven vehicle as claimed in claim 5, wherein the in-wheel motor driven vehicle is travelable by driving at least pair of right and left road wheels through the individual in-wheel motor units and the oil pump driving control means drivingly controls the oil pumps such that the oil suction and supply quantities when the vehicle speed is increased and reached to the set vehicle speed are predetermined quantities at which oil levels at the lower parts within the respective cases of the in-wheel motor units which provide the pair of left and right in-wheel motor units are mutually the same.

7. The lubrication control apparatus for the in-wheel motor units for use in the in-wheel motor driven vehicle as claimed in claim 6, wherein the oil pump driving control means drivingly controls the oil pumps such that each of the oil suction and supply quantities from the oil pumps is maintained at a predetermined quantity in a high vehicle speed region of the vehicle speed equal to or higher than the set vehicle speed.

8. The lubrication control apparatus for the in-wheel motor units for use in the in-wheel motor driven vehicle as claimed in either claim 6 or 7, wherein the predetermined quantity related to each of the oil suction and supply quantities is a minimum oil quantity required for the lubrication within each of the in-wheel motor units.

9. The lubrication control apparatus for the in-wheel motor units for use in the in-wheel motor driven vehicle as claimed in claim 1, wherein the oil pump driving control means drivingly controls the oil pumps to activate the oil pumps under a condition such that the vehicle speed is raised to the predetermined vehicle speed at which a remaining oil in an oil suction and supply passage to suck and supply oil is scattered in all directions and becomes disappeared after the travel start of the vehicle and drivingly controls the oil pumps to activate the oil pumps from a vehicle speed lower than the predetermined vehicle speed including the stop of the vehicle in accordance with a demanded driving torque of the vehicle.

10. The lubrication control apparatus for the in-wheel motor units for use in the in-wheel motor driven vehicle as claimed in claim 1, wherein the oil pump driving control means activates the oil pumps when the vehicle speed has reached to the predetermined vehicle speed after the start of traveling of the vehicle and drivingly controls the oil pumps such that the oil pumps are activated at a lower vehicle speed than the predetermined vehicle speed.
